# EUROPÄISCHE PATENTANMELDUNG

(11) **EP 2 371 622 A2**
(43) Veröffentlichungstag der Anmeldung: **05.10.2011**
(21) Anmeldenummer: 11002725.7
(22) Anmeldetag: 01.04.2011
(51) Int. Cl.: B60N 2/68, B60N 2/64

(54) **Rückenlehnenelement sowie Verfahren zur Herstellung eines Rückenlehnenelements für einen Fahrzeugsitz**

(30) Priorität: 01.04.2010 DE 102010013879
(71) Anmelder: SE Kunststoffverarbeitung GmbH & Co. KG, 88085 Langenargen (DE)
(72) Erfinder: Eymael, Thorsten, 88085 Langenargen (DE)
(74) Vertreter: Dobler, Markus

(57) **Zusammenfassung**

Es wird ein Rückenlehnenelement (6) für einen Fahrzeugssitz bestehend aus einer plattenförmigen Stützstruktur, die sich in einem eingebauten Zustand flächig hinter einer Anlehnfläche einer Rückenlehne erstreckt, vorgeschlagen. Erfindungsgemäß umfasst die Stützstruktur eine Aluminium-Sandwichstruktur (7) mit einer ersten Deckschicht (2) aus Aluminium sowie wenigstens einer zweiten Deckschicht (3, 11) und einer zwischen der ersten und zweiten Deckschicht angeordneten Abstandsstruktur (4). Außerdem werden eine Rückenlehne, ein Fahrzeugsitz sowie ein Verfahren zur Herstellung eines Rückenlehnenelements vorgeschlagen.

## Beschreibung

Die Erfindung betrifft ein Rückenlehnenelement nach dem Oberbegriff des Anspruchs 1, eine Rückenlehne sowie ein Fahrzeugsitz mit einem solchen Rückenlehnenelement und ein Verfahren zur Herstellung eines Rückenlehnenelements.

### Stand der Technik

In öffentlichen Verkehrsmitteln, zum Beispiel Zügen, ist es bekannt, Fahrgastsitze einzusetzen, bei welchen Rücklehnenelemente aus Holz für eine Rückenlehne eines Fahrgastsitzes Verwendung finden. Als Endoberfläche ist das Rückenlehnenelement zum Beispiel mit einem Schichtstoff beschichtet, um dem Holz eine gewünschte Optik zu verleihen.

### Aufgabe und Vorteile der Erfindung

Der Erfindung liegt die Aufgabe zugrunde, einen Fahrzeugsitz, insbesondere Fahrgastsitz bereitzustellen, der im Vergleich zu der oben angegebenen Ausführungsform verbesserte Eigenschaften besitzt.

Diese Aufgabe wird durch die Merkmale des Anspruchs 1, 14, 15 sowie 16 gelöst.

In den abhängigen Ansprüchen sind vorteilhafte und zweckmäßige Weiterbildungen der Erfindung angegeben.

Die Erfindung geht von einem Rückenlehnenelement für einen Fahrzeugsitz aus, das aus einer plattenförmigen Stützstruktur besteht, die sich in einem eingebauten Zustand flächig hinter einer Anlehnfläche einer Rückenlehne erstreckt. Der Kern der Erfindung besteht nun darin, dass die Stützstruktur eine Aluminium-Sandwichstruktur umfasst mit einer ersten Deckschicht aus Aluminium sowie wenigstens einer zweiten Deckschicht und einer zwischen der ersten und zweiten Deckschicht angeordneten Abstandsstruktur.

Die plattenförmige Sandwichstruktur erstreckt sich vorzugsweise über den überwiegenden Anteil der Erstreckung der Rückenlehne oder gegebenenfalls vollständig. über die Rückenlehne. Durch die Sandwichstruktur ergibt sich neben einer hohen Stabilität, die zumindest die Stabilität einer Holz-Rückenlehne erreichen kann, ein deutlich geringeres Gewicht. Das Gewicht einer Holzrückenlehne liegt zum Beispiel regelmäßig in einem Bereich von 4,5 kg, wogegen sich mit einer erfindungsgemäßen Struktur ein Gewicht von < 1,5 kg, zum Beispiel 1,3 kg erreichen lässt

Die Gewichtsersparnis kann insbesondere dann realisiert werden, wenn die Abstandsstruktur Hohlräume zwischen der ersten und zweiten Deckschicht ausbildet. Denkbar ist als Abstandsstruktur beispielsweise eine wellenförmige und/oder wabenförmige Struktur. Damit lässt sich das Verhältnis zwischen Gewicht und Stabilität optimieren.

Um einen gewünschten Aussteifungseffekt zu erreichen, wird im Weiteren vorgeschlagen, dass die Abstandsstruktur mit der ersten und zweiten Deckschicht verbunden ist. Zur Verbindung der Deckschicht mit der Abstandsstruktur können unterschiedliche Techniken zum Einsatz kommen. Denkbar sind insbesondere Klebe- und/oder Schweißverfahren.

Möglich ist auch der Einsatz einer vorgefertigten Vollaluminiumstruktur und/oder Kunststoffaluminiumstruktur, die dann in eine gewünschte Rückenlehnenform mit vorgegebener Front- und Seitenansicht gebracht wird.

Vorzugsweise weist die Sandwichstruktur von einer Seite betrachtet, welche in einem eingebauten Zustand die Seite der Rückenlehne darstellt, einen gekrümmten Verlauf auf, bei welchem die Sandwichstruktur zunächst nach hinten gebogen ist und dann wieder in einer aufrechten oder weniger nach hinten gebogenen Form verläuft. Bekannt ist ein so genannter S-Schlag.

Um die Sitzergonomie weiter zu verbessern, kann nicht nur eine eindimensionale Wölbung der Rückenlehne vorgesehen werden, sondern eine zweidimensionale Wölbung, so dass sich ein zweidimensional gewölbter Verlauf ergibt. Damit lässt sich zum Beispiel eine Art Sitzschalenform herstellen.

In einer weiteren besonders bevorzugten Ausgestaltung der Erfindung unterscheidet sich die Abstandsstruktur in einem Bereich einer Krümmung von der Abstandsstruktur der Sandwichstruktur, bei welcher die Sandwichstruktur im Wesentlichen in einer Ebene verläuft. Dadurch kann insbesondere dem Umstand Rechnung getragen werden, dass bei einer Herstellung eines Rückenlehnenelements mit einer homogenen Abstandsstruktur durch die Erzeugung einer Krümmung die Abstandsstruktur zwischen den Deckschichten in einer unerwünschten Weise gestört wird, die sich dann zum Beispiel auch nachteilig auf deren Stabilität auswirkt. Dies kann dadurch herrühren, dass im Krümmungsbereich hohe Umformkräfte auf die Abstandsstruktur wirken, die die Abstandsstruktur deformieren, gegebenenfalls vollständig zerstören, so dass die Stabilisierungsaufgabe der Abstandsstruktur nicht mehr gewährleistet ist. Denkbar ist der Einsatz einer Abstandsstruktur, die derart ausgestaltet ist, dass sie gerade durch die Erzeugung einer Krümmung eine erhöhte Stabilität erreicht bzw. die bestehende Stabilität zumindest nicht verliert.

Die zweite Deckschicht kann aus Kunststoff und/oder Aluminium bestehen. Gegebenenfalls wird die zweite Deckschicht vollständig aus Kunststoff hergestellt. Vorteilhafterweise erstreckt sich eine Kunststoffschicht der zweiten Deckschicht auch über die Stirnseiten der Sandwichstruktur. Dies kann zum Beispiel in einem Thermoformprozess für die Kunststoffschicht realisiert werden.

Um eine vorgegebene Stabilität der Sandwichstruktur zu erreichen, wird im Weiteren vorgeschlagen, dass im unteren Bereich der Sandwichstruktur, welcher sich in einem eingebauten Zustand im unteren Bereich der Rückenlehne befindet, die zweite Deckschicht eine Aluminiumschicht umfasst. Diese Aluminiumschicht kann sich zum Beispiel bis maximal zur Hälfte des Rückenlehnenelements, also insbesondere bis zur Hälfte der Höhe der Rückenlehne, erstrecken. Eine Kunststoffschicht kann sich daran anschließen und die verbleibende zweite Deckschicht für die Sandwichstruktur bilden. Denkbar ist jedoch auch, dass die Kunststoffschicht dann nicht nur den noch nicht bedeckten Bereich überdeckt, sondern auch den bereits mit Aluminium abgedeckten Bereich. Die Kunststoffschicht kann vorzugsweise als Endoberfläche für die Rückseite der Rückenlehne genutzt werden.

Die Kunststoffoberfläche kann in einem weiteren Schritt durch eine vorgegebene Oberflächentechnik veredelt werden.

In diesen Fällen ist die Rückenlehne in der hinteren Ansicht komplett mit der Kunststoffschicht, gegebenenfalls der veredelten Kunststoffschicht überzogen. Zusätzlich kann die Kunststoffschicht zum Beispiel durch Tiefziehen so gestaltet werden, dass sie in Randbereichen der Rückenlehnen nach vorne gebogen ist. Hierdurch lässt sich nicht nur ein definierter Abschluss zwischen der Aluminiumstruktur und dem Kunststoff erzielen, sondern auch eine Möglichkeit schaffen, um zum Beispiel die Rückenlehnenpolsterung daran festzulegen.

Die Vorderseite der Rückenlehne mit der Aluminiumoberfläche wird nach Fertigstellung des erfindungsgemäßen Rückenlehnenelements zum Beispiel mit einem Rückenlehnenpolster überzogen, wobei das Rückenlehnenelement die Rückseite der Rückenlehne und die sichtbare Rückseitenoberfläche bildet.

Zur Anbringung von Elementen an der Rückseite des Rückenlehnenelements, zum Beispiel zur Anbringung eines Haltegriffs, wird im Weiteren vorgeschlagen, dass in die Sandwichstruktur Verstärkungselemente eingefügt sind. Beispielsweise ist an einem Befestigungspunkt eines Haltegriffs die Abstandsstruktur im Wesentlichen massiv ausgebildet, um in der Sandwichstruktur Verankerungselemente, wie zum Beispiel eine Schraube, sicher verankern zu können.

Im Weiteren geht die Erfindung von einem Verfahren zur Herstellung eines Rückenlehnelements für einen Fahrzeugsitz, insbesondere Fahrgastsitz mit einer plattenförmigen Stützstruktur aus. Der Kerngedanke des Verfahrens liegt in einer Sandwichstruktur mit einer ersten Deckschicht aus Aluminium und einer Abstandsstruktur, auf die eine zweite Deckschicht folgt, welche der ersten Deckschicht gegenüber liegt, wobei die zweite Deckschicht auf die Abstandsstruktur aufgeklebt wird. Die zweite Deckschicht kann aus Aluminium und/oder Kunststoff bestehen. Durch das Aufkleben der zweiten Deckschicht lassen sich vielfältige Materialkombinationen zwischen Aluminium und Kunststoff erzeugen, ohne darauf angewiesen zu sein, dass die Materialpaarung an der Kontaktstelle durch anderweitige Prozesse, wie zum Beispiel Schweißen, verbindbar sein muss.

Um die Sandwichstruktur in eine gekrümmte Form zu bringen, ohne die Sandwichstruktur, insbesondere die Abstandsstruktur zu schwächen, wird im Weiteren vorgeschlagen, dass auf die erste Deckschicht zunächst einheitlich die Abstandsstruktur aufgebracht wird und dass in einem Bereich, in welchem die Sandwichstruktur eine Krümmung für einen gewünschten Verlauf erhält, die Abstandsstruktur modifiziert wird.

### Zeichnungen

Mehrere Ausführungsbeispiele der Erfindung sind in den Zeichnungen dargestellt und werden nachstehend unter Angabe von weiteren Einzelheiten und Vorteilen erläutert. Es zeigen:
- Figur 1: in einer schematischen Seitenansicht einen Ausschnitt aus einer erfindungsgemäßen Aluminium-Sandwichstruktur,
- Figur 2: in einer schematischen Seitenansicht ein Halbzeug für die Erzeugung einer erfindungsgemäßen Aluminium-Sandwichstruktur und
- Figur 3a und 3b: in einer schematischen Seitenansicht (Figur 3a) sowie einer schematischen Frontansicht (Figur 3b) ein Rückenlehnenelement für eine Rückenlehne.

### Beschreibung der Ausführungsbeispiele

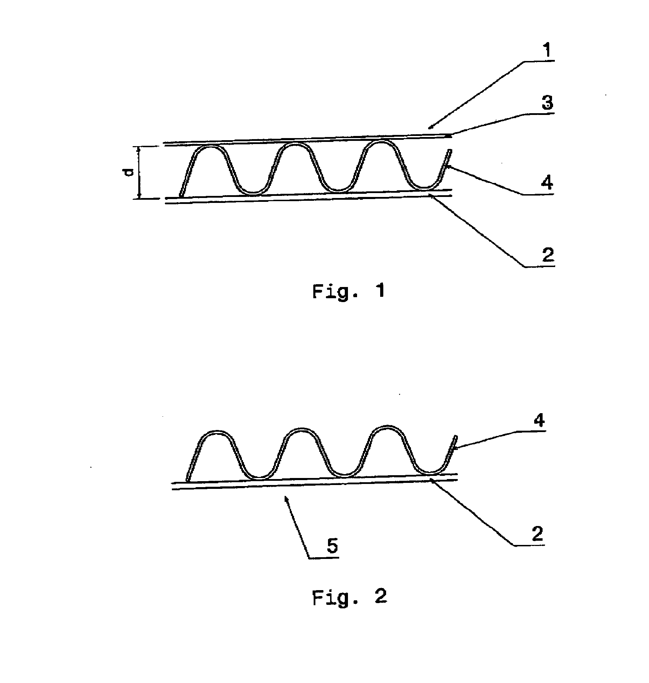

In Figur 1 ist ein Ausschnitt einer Stützstruktur eines Rückenlehnenelements in Form einer Aluminium-Sandwichstruktur 1 dargestellt.

Die Aluminium-Sandwichstruktur 1 umfasst eine erste Aluminiumdeckschicht 2 sowie eine zweite Aluminiumdeckschicht 3. Zwischen der ersten und der zweiten Deckschicht 2, 3 ist eine Innenlage 4 angeordnet, die die Abstandsstruktur zwischen den beiden Deckschichten 2, 3 bildet. Im vorliegenden Fall besteht die Innenlage aus einer gewellten Aluminiumschicht, wobei eine Amplitude der Heilung einen Abstand d der Deckschichten 2, 3 festlegt. Daraus ergibt sich unter Einbeziehung der jeweiligen Dicke der ersten und zweiten Deckschicht eine Gesamtdicke der Aluminium-Sandwichstruktur.

Abhängig davon, wie stark eine dementsprechend aufgebaute Aluminium-Sandwichstruktur in einem nachfolgenden Prozess zur Erzeugung einer gewünschten Rückenlehnenform gekrümmt wird, kann eine vollständig vorgefertigte Aluminium-Sandwichstruktur Nachteile mit sich bringen. Zum Beispiel wird ab einem Krümmungsgrad die Innenlage 4 in unerwünschter Weise deformiert, so dass die Stabilität im Krümmungsbereich unzureichend wird.

Um dies zu verhindern, kann die Stützstruktur auf der Grundlage eines Halbzeuges gemäß Figur 2 aufgebaut werden. Dieses Halbzeug besteht aus einer ersten Aluminiumdeckschicht 2 sowie einer an der Aluminiumdeckschicht fixierten Innenlage 4 aus gewelltem Aluminium.

Wie in Figur 1 für die Deckschicht 2, 3 belegt in Figur 2 die Deckschicht 2 vollständig das Rückenlehnenelement.

An Stellen, an welchen die Aluminium-Sandwichstruktur zur Ausbildung des Rückenlehnenelements eine Krümmung erhalten soll, kann die durchgehende Wellenstruktur der Innenlage 4 des Halbzeuges 5 gemäß Figur 2 modifiziert, zum Beispiel aufgebrochen werden. Gleichzeitig oder anschließend wird das Halbzeug in die gewünschte ergonomische Form gebracht.

Anschließend lässt sich in zum Beispiel einem Klebeverfahren eine zweite Deckschicht aufbringen. Diese kann aus Aluminium und/oder Kunststoff bestehen.

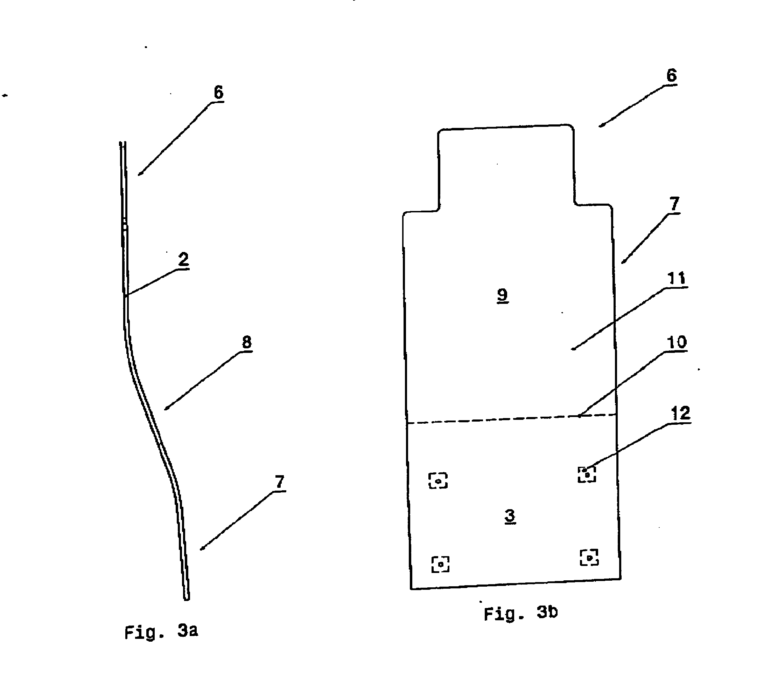

In Figur 3a und 3b ist ein Rückenlehnenelement 6 dargestellt.

Das Rückenlehnenelement besteht aus einer Sandwichstruktur 7, bei welcher eine Vorderseite 8 vollflächig aus einer Aluminiumlage als erste Deckschicht 2 besteht. Darauf aufgebracht ist eine Innenlage, zum Beispiel in Form einer gewellten Aluminiumschicht (in Figur 3a und 3b nicht zu sehen).

Eine Rückseite 9 des Rückenlehnenelements 6 besteht in einem Bereich unterhalb einer Linie 10 aus einer Schicht 3 aus Aluminium. Die komplette Rückseite 9 ist zusätzlich mit einer Kunststoffschicht 11 überzogen, die insbesondere in einem Bereich überhalb der Linie 10 alleine die zweite Deckschicht bildet. Durch die Aluminiumdeckschicht 3 wird das Rückenlehnenelement 6 im unteren Teil zusätzlich stabilisiert. Die Kunststoffdeckschicht 11 bildet vorzugsweise die Endoberfläche der Rückseite 9 des Rückenlehnenelement, die gleichzeitig die Rückseite einer fertigen Rückenlehne eines Fahrzeugsitzes darstellt.

Im Bereich der Aluminiumdeckschicht 3 sind Befestigungsstellen 12 in der Sandwichstruktur 7 ausgebildet. An den Befestigungsstellen 12 ist die Innenlage z.B. ausgespart und beispielsweise ein Vollmaterial mit einem Befestigungspunkt eingesetzt.

Zur Erzeugung einer fertigen Rückenlehne wird vorzugsweise auf die Vorderseite 8 des Rückenlehnenelements eine Polsterung aufgebracht. Diese kann zum Beispiel mit Abschnitten der Kunststoffdeckschicht 11, die sich über einen Stirnbereich des Rückenlehnenelements 6 Richtung der Vorderseite 8 erstrecken, verbunden werden.

### Bezugszeichenliste:

- 1: Aluminium-Sandwichstruktur
- 2: Aluminiumdeckschicht
- 3: Aluminiumdeckschicht
- 4: Innenlage
- 5: Halbzeug
- 6: Rückenlehnenelement
- 7: Sandwichstruktur
- 8: Vorderseite
- 9: Rückseite
- 10: Linie
- 11: Kunststoffdeckschicht
- 12: Befestigungsstelle

## Patentansprüche

1. Rückenlehnenelement (6) für einen Fahrzeugssitz bestehend aus einer plattenförmigen Stützstruktur, die sich in einem eingebauten Zustand flächig hinter einer Anlehnfläche einer Rückenlehne erstreckt, **dadurch gekennzeichnet, dass** die Stützstruktur eine Aluminium-Sandwichstruktur (1, 7) umfasst, mit einer ersten Deckschicht (2) aus Aluminium sowie wenigstens einer zweiten Deckschicht (3, 11) und einer zwischen der ersten und zweiten Deckschicht angeordneten Abstandsstruktur (4).

2. Rückenlehnenelement nach Anspruch 1, **dadurch gekennzeichnet, dass** die Abstandsstruktur (4) Hohlräume zwischen der ersten und zweiten Deckschicht ausbildet.

3. Rückenlehnenelement nach einem der vorhergehenden Ansprüche, **dadurch gekennzeichnet, dass** die Abstandsstruktur (4) mit der ersten und zweiten Deckschicht (2, 3) verbunden ist.

4. Rückenlehnenelement nach einem der vorhergehenden Ansprüche, **dadurch gekennzeichnet, dass** die Sandwichstruktur (1, 7) eine gekrümmte Oberfläche aufweist.

5. Rückenlehnenstruktur nach einem der vorhergehenden Ansprüche, **dadurch gekennzeichnet, dass** die Sandwichstruktur (1, 7) von einer Seite betrachtet, welche in einem eingebauten Zustand die Seite der Rückenlehne darstellt, einen gekrümmten Verlauf aufweist, bei welchem die Sandwichstruktur (1, 7) zunächst nach hinten gebogen ist und dann wieder in einer aufrechten oder weniger nach hinten gebogenen Form verläuft.

6. Rückenlehnenelement nach einem der vorhergehenden Ansprüche, **dadurch gekennzeichnet, dass** die Sandwichstruktur (1, 7) gewölbt ist.

7. Rückenlehnenstruktur nach einem der vorhergehenden Ansprüche, **dadurch gekennzeichnet, dass** die Abstandsstruktur (4) wellenförmig und/oder wabenförmig ist.

8. Rückenlehnenelement nach einem der vorhergehenden Ansprüche, **dadurch gekennzeichnet, dass** die Abstandsstruktur in einem Bereich einer Krümmung sich von der Abstandsstruktur der Sandwichstruktur (1, 7) unterscheidet, bei welcher die Sandwichstruktur (1, 7) im Wesentlichen in einer Ebene verläuft.

9. Rückenlehnenelement nach einem der vorhergehenden Ansprüche, **dadurch gekennzeichnet, dass** die zweite Deckschicht (3, 11) aus Kunststoff und/oder Aluminium besteht.

10. Rückenlehnenelement nach einem der vorhergehenden Ansprüche, **dadurch gekennzeichnet, dass** im unteren Bereich der Sandwichstruktur (1, 7), welcher sich in einem eingebauten Zustand im unteren Bereich einer Rückenlehne befindet, die zweite Deckschicht eine Aluminiumschicht (3) umfasst (maximal bis zur Hälfte).

11. Rückenlehnenelement nach einem der vorhergehenden Ansprüche, **dadurch gekennzeichnet, dass** in die Sandwichstruktur (1, 7) Verstärkungselemente eingefügt sind (Griffbefestigung).

12. Rückenlehnenelement nach einem der vorhergehenden Ansprüche, **dadurch gekennzeichnet, dass** eine Kunststoffschicht (11) der zweiten Deckschicht die Sandwichstruktur auf dieser Seite vollständig überzieht.

13. Rückenlehnenelement nach einem der vorhergehenden Ansprüche, **dadurch gekennzeichnet, dass** eine Kunststoffschicht (11) der zweiten Deckschicht sich über Stirnseiten der Sandwichstruktur (1, 7) erstreckt (gegebenenfalls tiefgezogene Struktur).

14. Rückenlehne mit Polster und einem Rückenlehnenelement nach einem der vorhergehenden Ansprüche.

15. Fahrzeugsitz mit einem Rückenlehnenelement nach einem der vorhergehenden Ansprüche.

16. Verfahren zur Herstellung eines Rückenlehnenelements für einen Fahrzeugssitz mit einer plattenförmigen Stützstruktur, **gekennzeichnet durch** eine Sandwichstruktur (1, 7) mit einer ersten Deckschicht (2) aus Aluminium und einer Abstandsstruktur, auf die eine zweite Deckschicht (3, 11) folgt, welche der ersten Deckschicht (2) gegenüberliegt, wobei die zweite Deckschicht (3, 11) auf die Abstandsstruktur aufgeklebt wird.

17. Verfahren zur Herstellung eines Rückenlehnenelements nach Anspruch 16, **dadurch gekennzeichnet, dass** auf die erste Deckschicht (2) zunächst einheitlich die Abstandsstruktur (4) aufgebracht wird und das in einem Bereich, in welchem die Sandwichstruktur (1, 7) eine Krümmung für einen gewünschten Verlauf erhält, die Abstandsstruktur (4) verändert wird. (Damit lässt sich die Sandwichstruktur in die gekrümmte Form bringen, ohne die Sandwichstruktur zu schwächen.)
